## Europäisches Patentamt

## European Patent Office

## Office européen des brevets

(19)

(11) Numéro de publication: **0 192 592 B1**

(12) **FASCICULE DE BREVET EUROPEEN**

(45) Date de publication du fascicule du brevet:
03.05.89

(51) Int. Cl.⁴: **F 16 C  33/04,** F 16 C  17/10, F 16 B  17/00

(21) Numéro de dépôt: **86420048.0**

(22) Date de dépôt: **17.02.86**

(54) **Méthode d'assemblage de flasques de butée sur coussinet lisse par sertissage.**

(30) Priorité: **19.02.85  FR 8502988**

(43) Date de publication de la demande:
**27.08.86 Bulletin 86/35**

(45) Mention de la délivrance du brevet:
**03.05.89 Bulletin 89/18**

(84) Etats contractants désignés:
**DE GB IT**

(56) Documents cités:
**DE-A- 2 433 928**
**FR-A- 2 108 522**
**FR-A- 2 300 254**
**FR-A- 2 370 887**
**GB-A- 1 297 559**
**GB-A- 2 134 189**

(73) Titulaire: **SOCIETE INDUSTRIELLE DES COUSSINETS SIC, 4, rue de la Liberté, F-74000 Annecy (FR)**

(72) Inventeur: **Serré, Yves, 23, Côte Perrière, F-74000 Annecy (FR)**

(74) Mandataire: **Pascaud, Claude et al, PECHINEY 28, rue de Bonnel, F-69433 Lyon Cédex 3 (FR)**

## Description

L'invention concerne un procédé d'assemblage par sertissage de flasques de butée sur un coussinet d'arbre et le produit ainsi obtenu.

On sait que les coussinets à joues ont été progressivement remplacés par des assemblages de flasques de butée sur un coussinet d'arbre lisse. Cet assemblage peut être effectué sur de nombreux moyens tels que l'agrafage ou le soudage.

Ainsi, l'agrafage a été décrit dans le brevet GB 1 297 559. Cependant, l'agrafage présente les inconvénients suivants:

— l'usinage des pièces est relativement complexe,

— les pièces sont épaisses donc relativement lourdes.

On connaît également, par le document FR-A-2 300 254, un coussinet d'arbre 11 en plusieurs parties assemblées, mais obtenu par une méthode complètement différente de celle de l'invention; en effet, celui-ci comporte une rainure circonférentielle 15 qui sert au positionnement du flasque 12, lequel est immobilisé dans sa position finale par déformation élastique du coussinet 11 sur les épaulements 22. On n'y trouve aucune trace de sertissage d'une paroi mince.

Le soudage par ailleurs présente les inconvénients du coussinet monobloc (aujourd'hui abandonné) et des risques de détérioration des couches antifriction par la chaleur de soudage.

La demanderesse a donc cherché une méthode éliminant ou du moins minimisant la plupart des inconvénients signalés ci-dessus.

La méthode selon l'invention consiste à sertir une paroi mince continue appartenant à un des deux éléments (flasque ou coussinet) dans un logement ou contre une surface appartenant à l'autre élément.

De façon plus précise, cette méthode consiste:

— soit, après avoir usiné une 1ère rainure circonférentielle dans la surface externe du coussinet, à usiner une 2ème rainure circonférentielle au niveau de l'alésage du flasque de butée, en laissant subsister une paroi mince aussi bien qu'un épaulement, séparés par cette 2ème rainure, à emboîter l'extrémité du coussinet dans la 2ème rainure et après emboîtement, à rabattre la paroi mince contre la surface interne du coussinet;

— soit, après avoir usiné une 1ère rainure au voisinage de l'extrémité de l'un des éléments en laissant subsister une paroi mince, à usiner une 2ème rainure au voisinage de l'extrémité de l'autre élément, à emboîter l'extrémité de l'autre élément dans la première rainure, et après emboîtement, à rabattre la paroi mince dans la 2ème rainure.

Cette paroi mince est située dans la partie support de l'élément considéré, c'est-à-dire en dehors de la couche anti-friction.

Cette paroi s'étend soit dans un plan perpendiculaire à l'axe du coussinet, soit sous la forme d'un élément de cylindre à paroi mince dont l'axe est sensiblement commun avec celui des coussinets assemblés.

L'épaisseur de cette paroi est généralement comprise entre 0,1 et 1 mm, de préférence entre 0,2 et 0,6 mm. Au-dessous de 0,1 mm, celle-ci est relativement fragile; au-dessus de 1 mm, l'opération de sertissage devient difficile.

L'invention sera mieux comprise à l'aide des exemples suivants illustrés par les figures 1 à 5.

La figure 1 représente une vue en coupe axiale des différents éléments constituant le coussinet assemblé.

Les figures 2 à 5 représentent en coupe axiale le détail de la zone de liaison (zone A, figure 1) par sertissage du flasque de butée et du corps du coussinet.

Dans tous les dessins, l'axe du coussinet est disposé horizontalement.

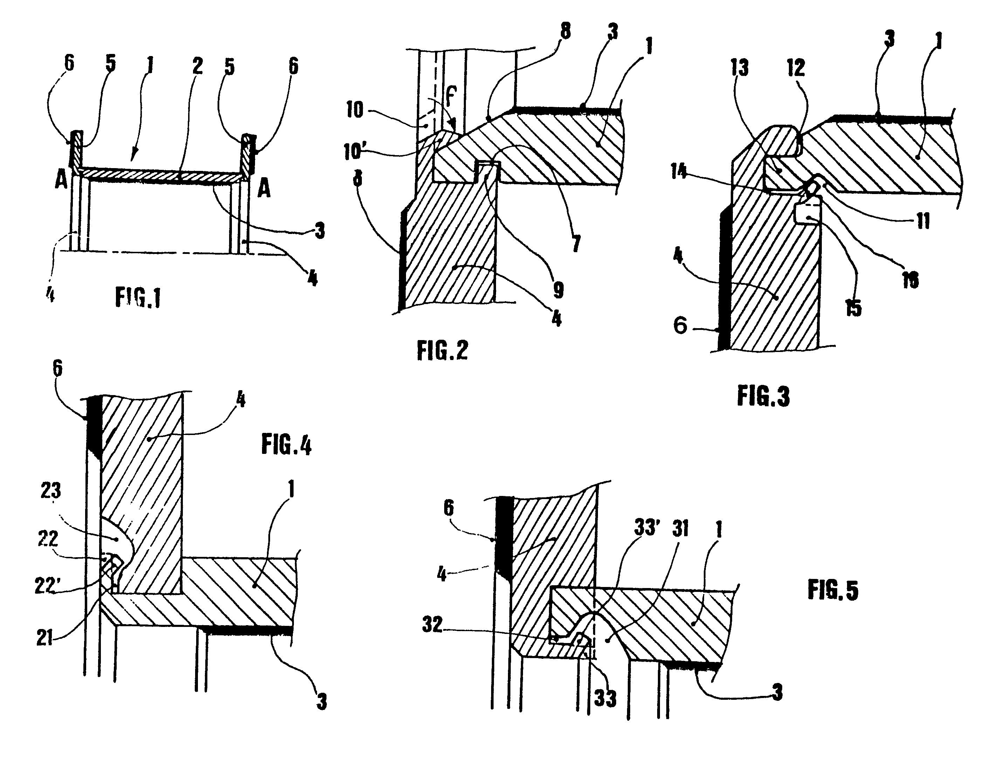

Le coussinet monté (figure 1) comporte un demi-coussinet d'arbre (1) constitué d'un support (2) garni intérieurement d'une couche anti-friction (3) assemblé par sertissage dans les zones d'extrémités (A), à deux flasques de butée (4) constitués d'un support (5) garni extérieurement d'une couche anti-friction (6) et ayant la forme d'une demi-couronne circulaire.

Dans la première version (figure 2), au voisinage de chaque extrémité du coussinet hémi-cylindrique (1), comportant une couche anti-friction (3) sur son alésage interne, on usine une rainure circonférentielle (7) de section rectangulaire et un chanfrein interne (8). Le flasque de butée (4) comportant une couche anti-friction externe (6) est usiné, au niveau de son alésage de manière à laisser subsister sur sa face interne un épaulement rectangulaire (9) pouvant s'emboîter, dans la rainure (7) et une paroi mince externe (10) et circulaire s'étendant parallèlement au plan du flasque. Après emboîtement de l'épaulement (9) dans la rainure (7), la paroi (10) est rabattue (en 10') contre le chanfrein (8) du coussinet comme indiqué par la flèche f, ce qui solidarise les deux pièces par sertissage.

La rainure (7) a été représentée comme ayant un profil rectangulaire mais toute autre forme peut être utilisée (profil triangulaire, demi-rond trapézoïdal, etc.), l'épaulement (9) ayant bien sûr, le profil conjugué du précédent.

Dans une deuxième version (figure 3), on usine au voisinage de l'extrémité du coussinet hémi-cylindrique (1), lequel comporte une couche anti-friction (3) interne, une rainure circonférentielle (11) de section triangulaire et sur son alésage interne un épaulement (12), ce qui délimite un bourrelet annulaire (13). On usine d'autre part au voisinage de l'alésage du flasque de butée (4) comportant une couche anti-friction externe (6), deux rainures circonférentielles co-axiales (14, 15) laissant subsister entre elles une mince paroi cylindrique (16).

On emboîte alors le bourrelet dans la rainure (14) et on rabat la paroi mince (16) contre le flanc de la rainure en V (11), assurant ainsi la liaison du demi-coussinet et du flasque par sertissage.

Dans une troisième version (figure 4), une rainure rectangulaire (21) est usinée à l'extérieur et au voisinage de l'extrémité du coussinet (1) en délimitant une paroi mince et plane (22). On usine également au voisinage de l'alésage du flasque (4) une gorge (23) de profil concave et de forme généralement triangulaire. Après emboîtement du flasque (4) sur l'extrémité du coussinet (1) on rabat la paroi mince (22) en (22′), ce qui assure la solidarisation de deux pièces (1 et 4).

Dans une quatrième variante (figure 5), on usine au voisinage de l'extrémité du coussinet (1) une rainure circulaire (31) sur sa face interne, dont le profil concave a sensiblement une forme triangulaire. On usine d'autre part sur le flasque (4), au voisinage de son alésage et sur sa face interne, une rainure rectangulaire (32) qui délimite avec ce dernier une paroi cylindrique mince (33). Après emboîtement des deux pièces (1 et 4), cette paroi (33) est rabattue en (33′) contre le flanc de la gorge (31), ce qui assure la liaison par sertissage des deux pièces.

Le procédé selon l'invention permet de réaliser des coussinets qui se montent en lieu et place de coussinets et flasques séparés existants, avec une facilité de montage beaucoup plus aisée que pour ces derniers.

L'adaptation du coussinet suivant l'invention à ses organes d'utilisation se fait soit par des jeux intentionnels lors du préassemblage des flasques sur le corps du coussinet, soit par une légère déformation des parois minces de liaison.

## Revendications

1. Méthode d'assemblage par sertissage d'un coussinet d'arbre (1) à un flasque de butée (4), méthode dans laquelle on usine une première rainure circonférentielle (7) dans la surface externe du coussinet, cette rainure recevant l'extrémité interne du flasque de butée, caractérisée en ce qu'on usine une deuxième rainure circonférentielle au niveau de l'alésage du flasque de butée, en laissant subsister une paroi mince (10) aussi bien qu'un épaulement (9), séparés par la deuxième rainure, on emboîte l'épaulement dans la première rainure (7) et l'extrémité du coussinet dans la deuxième rainure, et après l'emboîtement on rabat la paroi mince (10) contre la surface interne (8) du coussinet.

2. Méthode d'assemblage par sertissage d'un coussinet d'arbre (1) à un flasque de butée (4), méthode dans laquelle on usine une première rainure au voisinage de l'extrémité de l'un des éléments en laissant subsister une paroi mince (16, 22, 33) à l'extrémité de cet élément, caractérisée en ce qu'on usine une deuxième rainure (11, 23, 31) au voisinage de l'extrémité de l'autre élément, on emboîte l'extrémité de l'autre élément dans la première rainure, et après l'emboîtement des deux éléments on rabat la paroi mince dans la deuxième rainure.

3. Méthode selon la revendication 1, caractérisée en ce que la paroi mince et circulaire s'étend, avant déformation, dans un plan perpendiculaire à l'axe du coussinet.

4. Méthode selon la revendication 2, caractérisée en ce que la paroi mince, avant déformation, se présente sous la forme d'une cylindre dont l'axe coïncide sensiblement avec l'axe du coussinet.

5. Méthode selon l'une des revendications 1 à 4, caractérisée en ce que la deuxième rainure a une forme rectangulaire ou triangulaire.

6. Méthode selon l'une des revendications 1 à 4, caractérisée en ce que l'usinage laisse subsister une paroi mince (10, 16, 22, 33) dont l'épaisseur est compris entre 0,1 et 1 mm, et de préférence entre 0,2 et 0,6 mm.

## Patentansprüche

1. Verfahren zum Zusammenfügen eines Achslagers (1) mit einem Anschlagflansch (4) durch Bördeln, bei dem eine erste Umfangskerbe (7) in die Außenseite des Lagers eingebracht wird, wobei die Kerbe das innere Ende des Anschlagflansches aufnimmt, dadurch gekennzeichnet, daß eine zweite Umfangskerbe auf der Höhe der Öffnung des Anschlagflansches ausgebildet wird, unter Weiterbestehenlassen einer schlanken Seitenwand (10) sowie einer Schulter (9), die durch die zweite Kerbe getrennt sind, daß die Schulter in die erste Kerbe (7) eingeschlossen wird und das Ende des Lagers in die zweite Kerbe eingeschlossen wird, und nach Einschließung die schlanke Seitenwand (10) gegen die Innenseite (8) des Lagers umgeschlagen wird.

2. Verfahren zum Zusammenfügen eines Achslagers (1) mit einem Anschlagflansch (4) durch Bördeln, bei dem eine erste Kerbe in der Nähe des Endes von einem der Elemente ausgebildet wird unter Weiterbestehenlassen einer schlanken Seitenwand (16, 22, 33) am Ende dieses Elements, dadurch gekennzeichnet, daß eine zweite Kerbe (11, 23, 31) in der Nähe des Endes des anderen Elements ausgebildet wird, das Ende des anderen Elements in die erste Kerbe eingeschlossen wird und nach Einschluß der beiden Elemente die schlanke Seitenwand in die zweite Kerbe umgeschlagen wird.

3. Verfahren nach Anspruch 1, dadurch gekennzeichnet, daß die schlanke und kreisförmige Seitenwand sich vor dem Deformieren in einer zur Achse des Lagers senkrechten Ebene erstreckt.

4. Verfahren nach Anspruch 2, dadurch gekennzeichnet, daß die schlanke Seitenwand vor dem Deformieren in Form eines Zylinders vorliegt, dessen Achse im wesentlichen mit der Achse des Lagers übereinstimmt.

5. Verfahren nach einem der Ansprüche 1 bis 4, dadurch gekennzeichnet, daß die zweite Kerbe eine rechtwinklige oder dreieckige Form aufweist.

6. Verfahren nach einem der Ansprüche 1 bis 4, dadurch gekennzeichnet, daß das Ausbilden bzw. Formen eine schlanke Seitenwand (10, 16, 22, 33) weiterbestehen läßt, deren Dicke zwischen 0,1 und 1 mm beträgt, vorzugsweise zwischen 0,2 und 0,6 mm.

## Claims

1. A method of connecting a shaft bearing (1) to a thrust plate (4) by setting, in which method a first circumferential groove (7) is machined in the external surface of the bearing, this groove receiving the internal end of the thrust plate, characterised in that a second circumferential groove is machined in the region of the bore in the thrust plate, leaving a thin wall (10) as well as a shoulder (9) which are separated by the second groove, the shoulder is fitted into the first groove (7) and the end of the bearing into the second groove and, after fitting them together, the thin wall (10) is folded back against the internal surface (8) of the bearing.

2. A method of connecting a shaft bearing (1) to a thrust plate (4) by setting, in which method a first groove is machined in the end region of one of the elements while leaving a thin wall (16, 22, 33) at the end of this element, characterised in that a second groove (11, 23, 31) is machined in the end region of the other element, the end of the other element is fitted in the first groove and, after fitting the two elements together, the thin wall is folded back into the second groove.

3. A method according to claim 1, characterised in that the thin, circular wall extends, before deformation, into a plane perpendicular to the axis of the bearing.

4. A method according to claim 2, characterised in that, before deformation, the thin wall assumes the form of a cylinder, the axis of which coincides substantially with the axis of the bearing.

5. A method according to one of claims 1 to 4, characterised in that the second groove has a rectangular or triangular shape.

6. A method according to one of claims 1 to 4, characterised in that machining leaves a thin wall (10, 16, 22, 33), the thickness of which is between 0.1 and 1 mm, preferably between 0.2 and 0.6 mm.

FIG.1

FIG.2

FIG.3

FIG.4

FIG.5

EP 0 192 592 B1